# EUROPÄISCHE PATENTSCHRIFT

(11) **EP 0 685 494 B1**
(45) Veröffentlichungstag und Bekanntmachung des Hinweises auf die Patenterteilung: **07.10.1998**
(21) Anmeldenummer: 95108055.5
(22) Anmeldetag: 26.05.1995
(51) Int. Cl.: C08F 10/00

(54) **Katalysatorträger, geträgerte Metallocenkatalysatoren und deren Verwendung für die Herstellung von Polyolefinen**
Catalyst carrier, supported metallocene catalysts and their use in the preparation of polyolefins
Support de catalyseur, catalyseurs à base de métallocène sur support et leur utilisation pour la préparation de polyoléfines

(30) Priorität: 03.06.1994 AT 1130/94
(43) Veröffentlichungstag der Anmeldung: 06.12.1995
(73) Patentinhaber: PCD Polymere AG, 4021 Linz (AT)
(72) Erfinder: Ernst, Eberhard, Dr., A-4223 Katsdorf (AT); Reussner, Jens, Dr., A-4050 Traun (AT); Neissl, Wolfgang, Dipl.-Ing. Dr., A-4040 Lichtenberg (AT)
(74) Vertreter: Kunz, Ekkehard, Dr.

(56) Entgegenhaltungen:
- EP-A- 0 299 391
- EP-A- 0 638 595
- JOURNAL OF POLYMER SCIENCE PART A: POLYMER CHEMISTRY EDITION, Bd. 31, Nr. 12, November 1993 NEW-YORK, Seiten 2959-2968, XP 000412127 JANIAK CHRISTOPH 'Polymeric aluminoxanes'

## Beschreibung

Die Erfindung betrifft Katalysatorträger auf Basis von Aluminiumoxiden, Siliziumoxiden, Titanoxiden oder Zirkoniumoxiden, mit diesen Katalysatorträgern hergestellte Metallocenkatalysatoren sowie deren Verwendung bei der Olefin-Polymerisation.

Polypropylen läßt sich beispielsweise gemäß EP-A-530.647 durch den Einsatz von Katalysatoren herstellen, welche aus einem Metallocen und einem Aktivator bzw. Cokatalysator, wie z. B. Methylaluminoxan oder Perfluorotetraphenylborat, bestehen. Beim Einsatz solcher homogener Katalysatoren bei der Polymerisation werden allerdings Pulver mit nur geringer Schüttdichte erhalten. Die Kornmorphologie solcher Produkte läßt sich prinzipiell durch eine spezielle Vorbehandlung des Metallocens mit dem Cokatalysator etwas verbessern (EP-302 424). Nachteilig bei einem solchen Verfahren ist jedoch vor allem die starke Belagbildung in technischen Reaktoren (EPA 563 917).

Auch die Verwendung von Methylaluminoxan als Trägermaterial, welches in aliphatischen Lösungsmitteln unlöslich ist, bringt zwar eine gewisse Verbesserung der Aktivität, aber ebenfalls nur pulverförmige Produkte (Polymer 1991, Vol. 32, 2671 - 2673), das Verfahren ist außerdem unwirtschaftlich.

Eine Trägerung des Metallocens auf oxidische Materialien, wie Siliziumoxid oder Aluminiumoxid, unter Vorbehandlung des gegebenenfalls teilweise entwässerten Ausgangsmaterials mit dem Cokatalysator ist eine aus WO 91/09882 bekannte Methode, die bei der Ethylenhomo- und -copolymerisation eingesetzt wird. Dabei wird jedoch die Partikelgröße des Polymerkorns wesentlich durch die Teilchengröße des Trägermaterials bestimmt, so daß einer Kornvergrößerung im Vergleich zu konventionellen Magnesiumchlorid-Trägerkatalysatoren Grenzen gesetzt sind.

Es bestand deshalb die Aufgabe, ein Verfahren zu entwickeln, welches es gestattet, die Korngröße und die Korngrößenverteilung von mit Metallocenkatalysatoren hergestellten Polyolefinen gezielt zu steuern.

Überraschenderweise wurde nun gefunden, daß bei Verwendung eines speziellen Trägermaterials und anschließende Fixierung eines Umsetzungsproduktes aus einem Metallocen und einem Cokatalysator bzw. Aktivator die Korngrößenverteilung des Polymeren gezielt eingestellt werden kann.

Gegenstand der vorliegenden Erfindung ist somit ein Verfahren zur Herstellung eines Katalysatorträgers, das dadurch gekennzeichnet ist, daß man
a) ein hydrophiles, makroporöses, disperses Aluminiumoxid, Siliziumoxid, Titanoxid oder Zirkoniumoxid oder deren Mischungen bzw. Mischoxide bei 110 bis 800°C trocknet,
b) mit einem Aluminoxan und anschließend
c) mit mehrfunktionellen organischen Vernetzungsmitteln umsetzt.

Ein weiterer Gegenstand der Erfindung ist der gemäß dem erfindungsgemäßen Verfahren herstellbare Katalysatorträger, wobei man
a) ein hydrophiles, makroporöses, disperses Aluminiumoxid, Siliziumoxid, Titanoxid oder Zirkoniumoxid oder deren Mischungen bzw. Mischoxide bei 110 bis 800°C trocknet,
b) mit einem Aluminoxan und anschließend
c) mit mehrfunktionellen organischen Vernetzungsmitteln umsetzt.

Der erfindungsgemäße Katalysatorträger wird in einer mehrstufigen Reaktion aus einem anorganischen Oxid bevorzugt entsprechend der folgenden Vorgangsweise hergestellt:

In der ersten Stufe (a) wird ein hydrophiles, makroporöses und disperses Aluminium, Silizium-, Titan- oder Zirkoniumoxid wie beispielsweise in DE-PS 870.242 oder EP-A-585.544 beschrieben, das vorzugsweise keine inneren Oberflächen besitzt, oder deren Mischungen bzw. Mischoxide, im Stickstoffstrom oder im Vakuum bei Temperaturen von 110 bis 800 °C innerhalb von 1 bis 24 Stunden entwässert. Anschließend erfolgt eine Messung der sich in Abhängigkeit von der gewählten Trocknungstemperatur einstellenden Konzentration der Oberflächenhydroxylgruppen. Als Ausgangsmaterial eignen sich beispielsweise gemäß DE-PS 870.242 oder EP-A-585.544 nach dem Hochtemperaturhydrolyseverfahren aus gasförmigen Metallchloriden oder Siliziumverbindungen hergestellte oxidische Materialien, aber auch alle anderen hydrophilen oxidische Materialien mit den angeführten Eigenschaften. Die mittlere Primärpartikelgröße der dispersen Oxide liegt bei maximal etwa 100 µm, bevorzugt bei maximal etwa 10 µm und besonders bevorzugt im kolloidalen Bereich, vorzugsweise als hochdisperse Partikel bei etwa 3 bis 110 nm. Bevorzugt kommen Aluminiumoxid C und Aerosil 130 der Firma Degussa zum Einsatz.

In der zweiten Stufe (b) wird das getrocknete Oxid mit einem Aluminoxan umgesetzt, wobei es beispielsweise derart in einem Kohlenwasserstoff-Lösungsmittel wie z. B. in Toluol suspendiert wird, daß es mit dem Lösungsmittel bedeckt ist. Anschließend wird mit einem Überschuß von Aluminoxan umgesetzt und danach im Vakuum bei Temperaturen von etwa 20 - 60 °C getrocknet.

Erfindungsgemäß wird dabei ein Aluminoxan der Formel 1 für den linearen Typ: 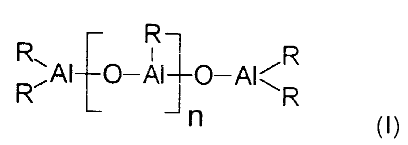 und / oder der Formel II: 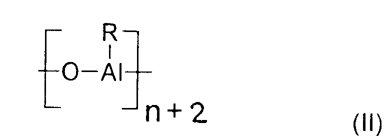 für den cyclischen Typ eingesetzt, wobei in den Formeln I und II die Reste R gleich oder verschieden sein können und eine C₁-C₆-Alkylgruppe bedeuten und n eine ganze Zahl von 1 - 50 ist. Bevorzugt sind die Reste R gleich und bedeuten Methyl, Isobutyl, Phenyl oder Benzyl. Das Aluminoxan kann auf verschiedene Arten nach bekannten Verfahren hergestellt werden. Eine Möglichkeit ist beispielsweise die Umsetzung von Aluminiumalkylen mit kristallwasserhaltigem Aluminiumsulfat (Hoechst EP-A-302424). In der vorliegenden Erfindung wird bevorzugt handelsübliches Methylaluminoxan (MAO, Fa. Witco) verwendet. Das Molverhältnis Aluminium (als Aluminoxan) zu Oberflächenhydroxylgruppen liegt zwischen 1 und 50, bevorzugt zwischen 1 und 20, besonders bevorzugt zwischen 5 und 10.

In der dritten Stufe (c) wird das trockene Reaktionsprodukt der Stufe b bevorzugt erneut suspendiert. Die Wahl des Lösungs- bzw. Suspensionsmittels richtet sich vor allem nach der Löslichkeit des verwendeten mehrfunktionellen Vernetzungsmittels. Werden zum Beispiel aliphatische oder aromatische Diole verwendet, sind Tetrahydrofuran (THF) oder andere Ether, beispielsweise Methyltertiärbutylether, geeignet. Besonders vorteilhaft ist die Wahl eines solchen Lösungsmittels, dessen Siedepunkt unterhalb der Zersetzungstemperatur des in Stufe b hergestellten Feststoffs liegt.
Das so suspendierte Reaktionsprodukt der Stufe b wird vorzugsweise mit einer Lösung eines oder mehrerer mehrfunktioneller organischer Vernetzungsmittel im gleichen Lösungsmittel behandelt. Die Reaktionsmischung wird ca. 30 Minuten gerührt und danach das Lösungsmittel bei Temperaturen oberhalb seines Siedepunktes aber unterhalb der Zersetzungstemperatur des Feststoffes getrocknet. Bei der Verwendung von beispielsweise Tetrahydrofuran als Lösungsmittel liegt diese Temperatur zwischen 70 und 100 °C. Zur Beseitigung eventuell ungebundener Bestandteile wird der Ansatz noch einmai in einem Lösungsmittel, wie z. B. Toluol suspendiert, 10 Minuten gerührt und das Waschtoluol dekantiert. Anschließend trocknet man im Vakuum bei Temperaturen von ca. 100 °C bis 120 °C solange, bis ein frei fließendes Pulver des Katalysatorträgers erhalten wird.
Als erfindungsgemäß zu verwendendes mehrfunktionelles organisches Vernetzungsmittel sind alle organischen Verbindungen mit mehr als einer funktionellen Gruppe geeignet, die mit einer Metallkohlenstoff-Bindung reagieren können. Bevorzugt werden bifunktionelle Vernetzungsmittel verwendet. Solche bifunktionelle organische Verbindungen können zum Beispiel aliphatische oder aromatische Diole, Aldehyde, Dicarbonsäuren, primäre oder sekundäre Diamine, Diepoxiverbindungen sein. Um störende Nebenreaktionen oder Reaktionsprodukte zu vermeiden, die einen zusätzlichen Reinigungsaufwand mitsichbringen würden, werden bevorzugt aliphatische und aromatische Diole, sekundäre Amine oder Diepoxiverbindungen oder deren Mischungen eingesetzt. Besonders bevorzugt handelt es sich um Butandiol, Hexandiol, Decandiol, Bisphenol A und 1,4-Butandioldiglycidether. In diesen Fällen wird als Lösungsmittel bevorzugt Tetrahydrofuran verwendet. Als tri- oder höherfunktionelle Vernetzungsmittel können beispielsweise Triethanolamin, Glycerin oder Tetraethylenpentamin eingesetzt werden.

Beim Einsatz der mehrfunktionellen Vernetzungsmittel besteht außerdem die Möglichkeit, in einer weiteren Reaktionsstufe nichtumgesetzte reaktive Gruppen mit beispielsweise Alkylaluminiumverbindungen, vorzugsweise mit Trimethylaluminium zu desaktivieren.

Das Molverhältnis zwischen dem in der Stufe b als Aluminoxan aufgetragenen Aluminium und dem Vernetzungsmittel kann in einem weiten Bereich schwanken und liegt zwischen 1 und 100, bevorzugt zwischen 1 und 40, besonders bevorzugt zwischen 5 und 12. Es ist insbesondere von der Art und Vorbehandlung der Metalloxide, der Art der verwendeten Aluminoxane, vom jeweiligen Molverhältnis von Al (als Aluminoxan) zu Oberflächenhydroxylgruppen am Metalloxid sowie von der Art des Vernetzers abhängig. Höhere Molverhältnisse Al zu Vernetzungsmittel werden dabei vor allem dann angewendet, wenn tri- oder höherfunktionelle Vernetzungsmittel eingesetzt werden, die eine entsprechend höhere Anzahl von Vernetzungsmöglichkeiten aufweisen.

Der erfindungsgemäß hergestellte Katalysatorträger auf Basis von hydrophilem, makroporösem, dispersem Aluminiumoxid, Siliziumoxid, Titanoxid oder Zirkoniumoxid oder deren Mischungen bzw. Mischoxiden, sowie weiters Aluminoxanen und mehrfunktionellen organischen Vernetzungsmitteln besitzt bevorzugt einen sehr niedrigen in Toluol löslichen Aluminoxan-Anteil, der vorzugsweise bei 0,01 bis 1,4 Mol%, insbesondere bei 0,02 bis 1,0 Mol%, besonders bevorzugt bei 0,04 bis 0,08 Mol%, bezogen auf Mole Al des eingesetzten Aluminoxan, gemessen bei 70 °C, liegt.

Der erfindungsgemäße Katalysatorträger weist eine Reihe von charakteristischen Eigenschaften auf.
Bedingt durch die Vernetzungsreaktion zwischen dem Aluminoxan und dem mehrfunktionellen organischen Vernetzungsmittel steigt die spezifische Oberfläche bei Verwendung hochdisperser Metalloxide von ca. 70 bis 120 m²/g auf 140 bis 200 m²/g, vorzugsweise auf 150 bis 170 m²/g (Bestimmungsmethode: N₂-Absorption, BET-Gleichung).
Die Teilchengröße steigt bei Verwendung hochdisperser Metalloxide von ca. 10 bis 30nm auf 1 bis 10µm, vorzugsweise auf 3 bis 6 µm (Bestimmungsmethode: Transmissionselektronenmikroskopie TEM).
Ein weiterer Effekt besteht in der Verringerung der Löslichkeit des Aluminoxans infolge der Vernetzungsreaktion. Der Nachweis dieses Effektes kann über Extraktionsversuche in geeigneten organischen Lösungsmitteln, beispielsweise in Toluol, und anschließender Aluminiumbestimmung dieser Lösungen (Bestimmungsmethode: Atom-Absorption-Spektroskopie) erbracht werden.
Wird das erfindungsgemäß verwendete Trägeroxid, beispielsweise Alumina C, nur mit einem Aluminoxan, vorzugsweise Methylaluminoxan, beispielsweise im molaren Verhältnis Al(Aluminoxan) : OH(Trägeroxid) von 20 bis 10 : 1 umgesetzt, so werden nach ein- bis dreistündigen Extraktionen in Toluol, bei Raumtemperatur als auch bei 70°C, Löslichkeiten des Aluminoxans von 45 bis 60 Mol-% gefunden (bezogen auf Mole Al des eingesetzten Methylaluminoxans). Verringert man das molare Verhältnis von Al(Aluminoxan) : OH(Trägeroxid) auf kleiner 10 : 1, so verringert sich auch die Löslichkeit des Aluminoxans. Beispielsweise wird für ein Verhältnis Al : OH = 1,6 eine Löslichkeit von 1,5 Mol-% gefunden.
Die chemische Umsetzung des aufgebrachten Aluminoxan mit organischen mehrfunktionellen Verbindungen führt zu einer stabilen Fixierung der amorphen, vernetzten Phase auf dem Trägeroxid. Die Ablösung der toluollöslichen Ausgangsverbindungen ist praktisch vernachlässigbar.
Wird beispielsweise gemäß dem beschriebenen Herstellungsverfahren ein Vernetzungsschritt mit einem mehrfunktionellen organischen Vernetzungsmittel eingefügt, beispielsweise mit Bisphenol A in einem molaren Verhältnis Al (Aluminoxan) : Bisphenol A von kleiner als 8 : 1, so werden nach ein- bis dreistündigen Extraktionen aller Katalysatorträger in Toluol, nur noch Spuren iöslicher Anteile (< 0,1 Mol-%) gefunden. Nach der Vernetzungsreaktion mit den mehrfunktionellen organischen Verbindungen kann auch ein Waschschritt eingefügt werden. Durch Aluminiumbestimmungen dieser toluolischen Waschlösungen können ebenfalls nur Spuren löslicher Aluminoxananteile (< 0,1 Mol-%) nachgewiesen werden.

Der erfindungsgemäße Katalysatorträger kann vorteilhafterweise für die Herstellung eines geträgerten Metallocenkatalysators eingesetzt werden.

Ein weiterer Gegenstand der Erfindung ist demnach ein geträgerter Metallocenkatalysator (Trägerkatalysator), der durch Vermischen bzw. in Kontakt bringen des oben beschriebenen, erfindungsgemäßen Katalysatorträgers mit dem Umsetzungsprodukt aus Metallocenen und Aktivatoren herstellbar ist. Als Aktivatoren eignen sich beispielsweise Aluminoxane oder Perfluorotetraphenylborate. Als Aluminoxane sind alle bereits bei der Herstellung des Katalysatorträgers angeführten Verbindungstypen einsetzbar. Bevorzugt werden Aluminoxane, besonders bevorzugt Methylaluminoxane eingesetzt. Es ist auch möglich, Gemische verschiedener Aktivatoren einzusetzen.

Prinzipiell kann jedes Metallocen oder Mischungen von Metallocenen mit den Aktivatoren umgesetzt werden. Mögliche Metallocene sind z. B. unverbrückte, unsubstituierte oder substituierte Cyclopentadienyl-, Indenyl- und Fluorenyl-Verbindungen von Metallen der Gruppe IVb, Vb oder Vlb des Periodensystems, wie zum Beispiel Bis(isopropyldicyclopentadienyl)zirkoniumdichlorid; verbrückte, unsubstituierte oder substituierte, unsymmetrische oder symmetrische Cyclopentadienyl-, Indenyl- und Fluorenyl-Verbindungen von Metallen der Gruppe IVb, Vb oder Vlb des Periodensystems, wie z. B. Ethylenbis(indenyl)zirkoniumdichlorid oder Ethylenbis(ferrocenoindenyl)zirkoniumdichlorid, wie sie beispielsweise in der DE-A-4417542, EP-A-530.647 oder EP-A-563.917 beschrieben sind.

Die Herstellung des geträgerten Metallocenkatalysators erfolgt dadurch, daß man die erfindungsgemäßen Katalysatorträger mit dem Umsetzungsprodukt aus Metallocenen und Aktivatoren in Kontakt bringt. Dazu kann beispielsweise das Metallocen zunächst mit dem Aktivator gemischt werden. Das Mischen erfolgt bevorzugt in einem Lösungsmittel. Dabei wird das Metallocen beispielsweise in einem inerten Kohlenwasserstoff aufgelöst und mit einer Lösung des Aktivators, beispielsweise des Aluminoxans, vermischt. Als inerte Lösungsmittel können beispielsweise aliphatische oder aromatische Kohlenwasserstoffe, bevorzugt Toluol verwendet werden. Die Konzentration des Aktivators in der Lösung liegt im Bereich von 5-30 Gew.-% bezogen auf die Gesamtlösung. Die Metallocene werden vorzugsweise in einer Menge von 10 ⁻⁴ - 1 mol pro mol Aktivator eingesetzt. Die Mischzeit beträgt 5 min bis 24 Stunden. vorzugsweise 5 bis 60 Minuten. Man arbeitet bei einer Temperatur von -10 bis +70°C, insbesondere bei 10 bis 40°C. Das Vermischen der Metallocen/Aktivator-Reaktionsmischung mit dem Katalysatorträger erfolgt bevorzugt in Lösung. Hierzu wird der Katalysatorträger mit einem inerten Lösungsmittel überschichtet und anschließend mit der Lösung des Metallocen-Aktivator-Komplexes verrührt. Als Lösungsmittel werden inerte aliphatische und aromatische Kohlenwasserstoffe bevorzugt. Insbesondere wird Toluol verwendet. Die Reaktionszeit beträgt 10 min bis 24 Stunden, vorzugsweise 10 bis 60 Minuten. Es wird bei einer Temperatur von 0 bis 80°C, insbesondere bei 10 bis 50°C gearbeitet.

Nach Beendigung der Reaktion wird das Lösungsmittel bevorzugt im Vakuum bei Temperaturen zwischen 10 und 90 °C, vorzugsweise zwischen 25 und 70 °C, abgezogen, danach mit einem niedrigsiedenden, inerten Aliphaten mehrmals gewaschen. Bevorzugt wird n-Pentan eingesetzt. Der Metallocengehalt des Trägerkatalysators liegt im Bereich zwischen 0,01 bis 10 Gew.%, vorzugsweise zwischen 0,1 bis 3 Gew.% bezogen auf die Masse des Gesamtkatalysators.

Die Korngröße und die Korngrößenverteilung des Katalysators kann z. B. durch die Reaktionsführung über den Vernetzungsgrad in Stufe c gesteuert werden. Bei optimalen Bedingungen zeichnet sich das Katalysatorpulver dadurch aus, daß der Feinanteil (Teilchengröße kleiner 1 µm) besonders gering ist und lediglich etwa 1 % beträgt.

Ein weiterer Gegenstand der Erfindung ist ein Verfahren zur Herstellung von Polyolefinen durch Polymerisation oder Copolymerisation von Olefinen, das dadurch gekennzeichnet ist, daß als Polymerisationskatalysator der erfindungsgemäße geträgerte Metallocenkatalysator eingesetzt wird, sowie die Verwendung von geträgerten Metallocenkatalysatoren gemäß Erfindung bei der Polymerisation oder Copolymerisation von Olefinen zur Herstellung von Polyolefinen.

Der erfindungsgemäße Katalysator kann sowohl als Pulver, als auch als Suspension in einem inerten Kohlenwasserstoff, beispielsweise Pentan, Hexan, Cyclohexan oder Mineralöle, in die Polymerisationsmischung eingebracht werden.

Die Polymerisation wird in bekannter Weise in Lösungs-, Suspensions- oder Gasphasenverfahren, kontinuierlich oder diskontinuierlich bei einer Temperatur von -10 bis + 200°C, vorzugsweise + 20 bis + 80°C durchgeführt.

Der erfindungsgemäße Trägerkatalysator ist ohne weitere aktivierende Zusätze polymerisationsaktiv. Es erweist sich jedoch als besonders vorteilhaft, als Scavanger und als zusätzlichen Aktivator Aluminiumalkyle, bevorzugt Trimethyl-, Triethyl- oder Triisobutylaluminium oder Alkylaluminoxane, beispielsweise Methylaluminoxan, einzusetzen. Die eingesetzte Menge beträgt, bezogen auf das Aluminium, 50 - 5 000, bevorzugt 100 - 500 mol pro mol Übergangsmetall des Metallocenkatalysators.

Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 20 C-Atomen. R^{a} und R^{b} können jedoch auch mit den sie verbindenden C-Atomen einen Ring bilden. Beispielsweise werden Olefine wie Ethylen, Propylen, 1-Buten, 1-Hexen, 4-Methyl-1-penten, 1-Octen, Cyclopenten, Norbornen oder Norbornadien polymerisiert oder copolymerisiert. Bevorzugt werden Ethylen, Propylen und Buten, besonders bevorzugt Ethylen und Propylen, polymerisiert oder copolymerisiert.

Als Molmassenregler wird, falls erforderlich, Wasserstoff zugegeben. Der Gesamtdruck der Polymerisation beträgt üblicherweise 0,5 - 150 bar. Bevorzugt ist die Polymerisation in dem Druckbereich von 1 - 40 bar.

Wenn die Polymerisation als Suspensions- oder Lösungspolymerisation durchgeführt wird, wird ein inertes Lösemittel verwendet. Beispielsweise können aliphatische oder cycloaliphatische Kohlenwasserstoffe, wie Pentan, Hexan oder Cyclohexan, verwendet werden. Brauchbar ist auch Toluol. Bevorzugt wird im flüssigen Monomeren polymerisiert.

Bei der Copolymerisation von Ethylen mit Propylen wird vorzugsweise in flüssigem Propylen oder in Hexan als Suspensionsmittel polymerisiert. Vorzugsweise wird bei der Polymerisation in flüssigem Propylen das Ethylen in der Menge zugeführt, daß sich über der Flüssigphase ein Partialdruckverhältnis P_{C3}/P_{C2} > 0,5, insbesondere > 1,0 einstellt (P_{C2} = Partialdruck des Ethylens in der Gasphase über der Suspension; P_{C3} = Partialdruck des Propylens in der Gasphase über der Suspension). Bei der Copolymerisation in Hexan als Suspensionsmittel wird ein Ethylen /Propylen-Gasgemisch mit einem Propylengehalt von 1 bis 50 Mol%, vorzugsweise 5 bis 30 Mol%, zugesetzt. Der Gesamtdruck wird während der Polymerisation durch Nachdosierung konstant gehalten. Der Gesamtdruck liegt bei 0,5 bis 40 bar, vorzugsweise 1 bis 20 bar. Die Dauer der Polymerisation beträgt 10 Minuten bis 6 Stunden, vorzugsweise 30 Minuten bis 2 Stunden.

Die erfindungsgemäß verwendeten Katalysatoren ermöglichen die Herstellung von Homo-, Co- und Blockcopolymeren. Durch ihren Einsatz ist es möglich, die Korngröße der Polymerisate in Abhängigkeit von den Herstellungsbedingungen des Trägers gezielt zu steuern. Es ist deshalb der besondere Vorteil des erfindungsgemäßen Katalysators, daß die Korngröße der Polymerisate an die jeweiligen Erfordernisse der eingesetzten Technologie angepaßt werden kann.
Außer der Möglichkeit zur gezielten Steuerung der Korngröße und der Korngrößenverteilung besitzt das erfindungsgemäße Verfahren den weiteren Vorteil, daß die erhaltenen Polyolefine in sphärischer Form vorliegen und daß sie einen nur geringen Feinkornanteil aufweisen.
Weitere Vorteile ergeben sich aus der Herstellungstechnologie. Der Katalysator ist prinzipiell nach einem "Eintopfverfahren" herstellbar, wobei bei entsprechender Reaktionsführung keine störenden Nebenprodukte entstehen und die verwendeten Lösungsmittel recyclierbar sind.

Die nachfolgenden Beispiele sollen die Erfindung näher erläutern.

Es bedeuten
- MC: Metallocen,
- MAO: Methylaluminoxan,
- TEAL: Triethylaluminium
- M_{w}: gewichtsmittlere Molmasse in g/mol ermittelt durch GPC,
- Mₙ: zahlenmittlere Molmasse in g/mol ermittelt durch GPC,
- M_{w}/Mₙ: Verteilungsbreite
- d₅₀: mittlerer Korndurchmesser ermittelt durch Siebanalyse,
- Tₘ: Schmelzpunkt ermittelt durch DSC.

### Beispiel 1 Herstellung des Trägerkatalysators A

Als Trägermaterial wurde Aluminiumoxid C (Fa. Degussa) verwendet. Die mittlere Primärpartikelgröße liegt im kolloidalen Bereich und wird vom Hersteller mit 13 nm angegeben. Das Oxid wurde vor Einsatz zunächst bei 110°C über einen Zeitraum von 16 Stunden unter Anlegen von Vakuum entwässert, anschließend bei 400°C über einen Zeitraum von 24 Stunden unter Vakuum geglüht und unter einem Stickstoffüberdruck von 1,5 bar abgekühlt und gelagert. Der OH-Gehalt betrug 0,88 mmol/g Al₂O₃ (Bestimmungsmethode nach Zeriwitinov; Houben-Weyl, Methoden der organischen Chemie (1953) 317).
5 g Aluminiumoxid C wurden mit 40 ml trockenem Toluol suspendiert. Anschließend wurde die Suspension mit 24,14 g einer 10%-igen toluolischen MAO-Lösung (Fa. Witco; 44 mmol Al) gemischt und 45 min gerührt. Danach wurde bei mäßigem Rühren das Lösungsmittel bei Raumtemperatur im Vakuum abgezogen. Danach erfolgte die erneute Suspension des erhaltenen Feststoffes mit 40 ml wasserfreiem THF. Dem suspendierten Reaktionsgemisch wurde eine Lösung aus 3,96 mmol Bisphenol A und 40 ml THF innerhalb von 5 min zugegeben und weitere 30 min gerührt. Anschließend wurde das Lösungsmittel unter mäßigem Rühren innerhalb von 30 min bei 70°C im Vakuum abgezogen. Das erhaltene feinkörnige Pulver wurde nochmals mit 60 ml Toluol versetzt, 10 min gerührt, anschließend 15 min stehen gelassen und die über dem abgesetzten Feststoff erhaltene klare Lösung dekantiert. Danach wurde unter Rühren bei 100°C im Vakuum getrocknet.
Der so hergestellte Katalysatorträger wurde erneut in Toluol suspendiert und mit einer toluolischen Mischung aus 45 mg Ethylenbis(indenyl)zirkoniumdichlorid (Fa. Witco) und 21,42 mmol einer 10%-igen MAO-Lösung versetzt worden. Der aktive Zirkonocen/MAO-Komplex wurde zuvor 15 min stehen gelassen.
Nach einer erneuten Rührdauer von 30 min wurde das Toluol bei Raumtemperatur abgezogen, anschließend zweimal mit 40 ml wasserfreiem n-Pentan gewaschen und im Vakuum getrocknet. Zurück blieb ein geträgerter Metallocenkatalysator (Trägerkatalysator A) als gelber feinkörniger Feststoff mit einem Metallocengehalt von 0,48 Gew-%, der nach mehrtägigem Stehenlassen unter Inertgas seine Farbe nach orange bis rotbraun änderte.

### Beispiel 2 Polymerisation mit Trägerkatalysator A

Ein 2 l Rührreaktor (Fa. Büchi) wurde nach dem Inertisieren bei Raumtemperatur mit 1,42 g einer 10%igen MAO-Lösung (Al[MAO] : Zr[MC] = 200) und 200 g flüssigem Propylen gefüllt und die Mischung bei 350 Umdrehungen/min 5 Minuten gerührt.
0,987 g des unter Beispiel 1 hergestellten Trägerkatalysators A wurden mit weiteren 300 g Propylen in den Reaktor gespült, die Rührzahl auf 700U/min erhöht, der Ansatz auf die Polymerisationstemperatur von 70°C aufgeheizt und die Temperatur während einer Zeit von zwei Stunden konstant gehalten. Die Reaktion wurde durch Flashen des Propylens nach zwei Stunden beendet. Es wurden 100 g Polpropylen mit einem mittleren Korndurchmesser d₅₀ gemäß Siebanalyse von 2000 µm und einem Feinkornanteil (< 200 µm) von 4,23 Gew-% erhalten. Die Polymerpartikel sind kugelförmig ( M_{w} = 25.000 g/mol; Verteilungsbreite 2,5; Tₘ = 131°C).

### Beispiel 3 Polymerisation mit Trägerkatalysator A

In einem 5 l Reaktor (Fa. Büchi) werden nach Inertisieren bei Raumtemperatur 3,64 ml einer 1,011 molaren Triethylaluminium-Lösung (Lösungsmittel Hexan; Al[TEAL] : Zr[MC] = 100) mit 500g flüssigem Propylen gefüllt und 5 min bei 350 U/min gerührt.
1,55 g des unter Beispiel 1 hergestellten Trägerkatalysators A werden mit weiteren 1000 g flüssigem Propylen eingespült, die Rührzahl auf 700 U/min erhöht, der Ansatz auf die Polymerisationstemperatur von 70°C aufgeheizt und die Temperatur während einer Zeit von zwei Stunden konstant gehalten. Die Reaktion wird durch Flashen des Propylens nach zwei Stunden beendet. Es wurden 80 g Polypropylen mit einem mittleren Korndurchmesser d₅₀ gemäß Siebanalyse von 710 µm und einem Feinkornanteil (< 200 µm) von 1,6 Gew-% erhalten. Die Polymerpartikel sind kugelförmig ( M_{w} = 27.000 g/mol; Verteilungsbreite 2,5; Tₘ = 132°C).

### Beispiel 4 Polymerisation mit Trägerkatalysator A

Die Versuchsdurchführung erfolgte analog Beispiel 2, jedoch wurden 0,992 g des Trägerkatalysators A eingesetzt, auf die Zugabe der 10%igen MAO-Lösung wurde verzichtet.
Es wurden 11 g Polpropylen mit einem mittleren Korndurchmesser d₅₀ gemäß Siebanalyse von 500 µm und einem Feinkornanteil (< 200 µm) von 3,6 Gew-% erhalten. Die Polymerpartikel sind kugelförmig (M_{w} = 28000 g/mol; Verteilungsbreite 2,3 ; Tₘ = 136°C).

### Beispiel 5 Herstellung des Trägerkatalysators B

Als Trägermaterial wurde Aluminiumoxid C (Fa. Degussa) verwendet. Das Oxid wurde vor Einsatz zunächst bei 400°C über einen Zeitraum von 4 Stunden unter einem Stickstoffstrom getrocknet. Der OH-Gehalt betrug 0,99 mmol/g Al₂O₃. 3,75 g Aluminiumoxid C wurden mit 40 ml trockenem Toluol suspendiert. Anschließend wurde die Suspension mit 7,65 g einer 30%-igen toluolischen MAO-Lösung (Fa. Witco; 37,1 mmol Al) gemischt und 45 min gerührt. Danach wurde bei mäßigem Rühren das Lösungsmittel bei Raumtemperatur im Vakuum abgezogen. Danach erfolgte die erneute Suspension des erhaltenen Feststoffes mit 40 ml wasserfreiem THF. Dem suspendierten Reaktionsgemisch wurde eine Lösung aus 4,82 mmol Bisphenol A und 40 ml THF innerhalb von 5 min zugegeben und weitere 30 min gerührt. Anschließend wurde das Lösungsmittel unter mäßigem Rühren innerhalb von 30 min bei 70°C im Vakuum abgezogen. Das erhaltene feinkörnige Pulver wurde nochmals mit 60 ml Toluol versetzt, 10 min gerührt, anschließend 15 min stehen gelassen und die über dem abgesetzten Feststoff erhaltene klare Lösung dekantiert. Danach wurde unter Rühren bei 100°C im Vakuum getrocknet.
1,8 g des so präparierten Trägermaterials wird erneut in Toluol suspendiert und mit einer toluolischen Mischung aus 36 mg Ethylenbis(indenyl)zirkoniumdichlorid (Fa. Witco) und 3,75 mmol einer 30%-igen MAO-Lösung (molare Verhältnis Al : Zr = 210) versetzt worden. Der aktive Zirkonocen/MAO-Komplex wurde zuvor 15 min stehen gelassen.

Nach einer erneuten Rührdauer von 30 min wurde das Toluol bei Raumtemperatur abgezogen, anschließend zweimal mit 40 ml wasserfreiem n-Pentan gewaschen und im Vakuum getrocknet. Zurück blieb ein orangefarbener feinkörniger Feststoff mit einem Metallocengehalt von 2 Gew-%.

### Beispiel 6 Polymerisation mit Trägerkatalysator B

Ein 2 l Rührreaktor (Fa. Büchi) wird nach dem Inertisieren bei Raumtemperatur mit 200g flüssigem Propylen gefüllt und 5 Minuten gerührt.
0,250 g des unter Beispiel 5 hergestellten Trägerkatalysators B werden mit weiteren 300 g Propylen in den Reaktor gespült, die Rührzahl auf 700 U/min erhöht, der Ansatz auf die Polymerisationstemperatur von 70°C aufgeheizt und die Temperatur während einer Zeit von zwei Stunden konstant gehalten. Die Reaktion wird durch Flashen des Propylens nach zwei Stunden beendet. Es wurden 100 g Polpropylen mit einem mittleren Korndurchmesser d₅₀ gemäß Siebanalyse von 1500 µm und einem Feinkornanteil (< 200 µm) von 4 Gew-% erhalten. Die Polymerpartikel sind kugelförmig (M_{w} = 27.000 g/mol; Verteilungsbreite 2,3; Tₘ = 133°C).

### Beispiel 7 Polymerisation mit Trägerkatalysator B

Die Versuchsdurchführung erfolgte analog Beispiel 6, jedoch wurden 0,162 g des Trägerkatalysators B eingesetzt. Unter Propylengegenstrom wurden vor Beginn der Polymerisation 0,05 ml einer 1 molaren Trimethylaluminium/Hexan-Lösung als Scavenger zugesetzt, danach 200g Propylen eingeleitet und 5 min gerührt. Anscließend erfolgte die Zugabe des Katalysators mit weiteren 300 g Propylen. Nach einer Polymerisationsdauer von 2h bei 70°C wurde die Polymerisation durch Flashen des überschüssigen Propylens unterbrochen. Es konnten 56 g eines sehr einheitlichen Produktes mit einem mittleren Korndurchmesser d₅₀ gemäß Siebanalyse von 1000 µm und einem Feinkornanteil (< 200 µm) von 0,7 Gew-% erhalten werden. Die Polymerpartikel sind kugelförmig (M_{w} = 24000 g/mol; Verteilungsbreite 2; Tₘ = 131°C).

### Beispiel 8 Herstellung des Trägerkatalysators C

Die Versuchsdurchführung erfolgte analog Beispiel 1, jedoch wurde das Aluminiumoxid C zuvor bei 400°C unter einem Stickstoffgegenstrom über eine Zeitdauer von 4 Stunden getrocknet. Der OH-Gehalt betrug 0,99 mmol/g Al₂O₃. 5,8 g des getrockneten Trägermaterials wurden mit 11,15 g einer 30%-igen MAO-Lösung (57,42 mmol Al) umgesetzt. Anschließend wurde das Reaktionsprodukt mit 4,305 mmol Bisphenol A (Al[MAO] : Bisphenol A = 13) umgesetzt. Die Herstellung des Trägerkatalysators erfolgte durch Zugabe einer Mischung aus 48 mg Ethylenbis(indenyl)zirkoniumdichlorid und 12,6 g 10%-iger MAO-Lösung. Nach der vollständigen Trocknung erhielt man ein schwach gelbes, feinkörniges Pulver mit einem Metallocengehalt von 0,5 Gew-%.

### Beispiel 9 Polymerisation mit Trägerkatalysator C

Die Versuchsdurchführung erfolgte analog Beispiel 2. Es wurden 1,025 g einer 10%-igen MAO-Lösung als Scavenger (Al[MAO] : Zr[MC] = 250) und 0,586 g des festen Trägerkatalysators C eingesetzt. Die Gesamtmenge an flüssigem Propylen betrug 500 g.
Es wurden 50 g Polypropylen mit einem mittleren Korndurchmesser d₅₀ gemäß Siebanalyse von 2000 µm und einem Feinkornanteil (< 200 µm) von 4,0 Gew-% erhalten. Die Polymerpartikel sind kugelförmig ( M_{w} = 26.000 g/mol; Verteilungsbreite 2,5 ; Tₘ = 132°C).

### Beispiel 10 Herstellung des Trägerkatalysators D

Die Versuchsdurchführung erfolgte analog Beispiel 1, jedoch wurde das Trägermaterial Aluminiumoxid C zuvor bei 200°C unter einem Stickstoffgegenstrom über eine Zeitdauer von 4 Stunden getrocknet. Der OH-Gehalt betrug 1,97 mmol/g Al₂O₃.

Es wurden 4,8 g des getrockneten Trägermaterials mit 9,18 g einer 30%-igen MAO-Lösung (47,28 mmol Al; Al[MAO] : OH [Al₂O₃] = 5) umgesetzt. Anschließend wurde das Reaktionsprodukt mit 3,78 mmol Bisphenol A umgesetzt. Die Herstellung des Trägerkatalysators erfolgte durch Zugabe einer Mischung aus 41,8 mg Ethylenbis(indenyl)zirkoniumdichlorid und 4,7 g einer 30%-igen MAO-Lösung. Nach der vollständigen Trocknung erhielt man ein gelbes, feinkörniges Pulver mit einem Metallocengehalt von 0,5 Gew-%.

### Beispiel 11 Polymerisation mit Trägerkatalysator D

Analog zur Versuchsdurchführung in Beispiel 2 wurden zunächst 1,726 g 10%-ige MAO-Lösung (Al[MAO] : Zr[MC] = 250) und 200 g flüssiges Propylen in den inertisierten 21-Reaktor eingespült. Nach einer Rührdauer von 5 min bei Raumtemperatur erfolgte die Zudosierung von 0,997 g Trägerkatalysator D und weiterer 300 g Propylen. Die Polymerisationsdauer betrug 2h, die Polymerisationstemperatur 70°C, anschließend wurde das überschüssige Propylen geflasht. Es wurden 94 g Polypropylen mit einem mittleren Korndurchmesser d₅₀ gemäß Siebanalyse von 1000 µm und einem Feinkornanteil (< 200 µm) von 5,74 Gew-% erhalten. Die Polymerpartikel sind kugelförmig ( M_{w} = 24.000 g/mol; Verteilungsbreite 2,7; Tₘ = 129°C).

### Beispiel 12 Herstellung des Trägerkatalysators E

Die Herstellung erfolgte analog zum Beispiel 10, allerdings wurden 4 g getrocknetes Aluminiumoxid C mit 15,3 g 30%-iger MAO-Lösung umgesetzt (Al[MAO] : OH [Al₂O₃] = 10). Anschließend wurde das Reaktionsprodukt mit 7,92 mmol Bisphenol A umgesetzt. Die Herstellung des Trägerkatalysators erfolgte durch Zugabe einer Mischung aus 44,0 mg Ethylenbis(indenyl)zirkoniumdichlorid und 10,9 g 10%-iger MAO-Lösung. Nach der vollständigen Trocknung erhielt man ein gelbes, feinkörniges Pulver mit einem Metallocengehalt von 0,52 Gew-%.

### Beispiel 13 Polymerisation mit Trägerkatalysator E

Analog zur Versuchsdurchführung in Beispiel 2 wurden zunächst 0,54 g 30%-ige MAO-Lösung (Al[MAO] : Zr[MC] = 250) und 200 g flüssiges Propylen in den inertisierten 21-Reaktor eingespült. Nach einer Rührdauer von 5 min bei Raumtemperatur erfolgte die Zudosierung von 0,749 g Trägerkatalysator E und weiterer 300 g Propylen. Die Polymerisationsdauer betrug 2h, die Polymerisationstemperatur 70°C, anschließend wurde das überschüssige Propylen geflasht. Es wurden 35 g Polypropylen mit einem mittleren Korndurchmesser d₅₀ gemäß Siebanalyse von 1000 µm und einem Feinkornanteil (< 200 µm) von 4,2 Gew-% erhalten. Die Polymerpartikel sind kugelförmig ( M_{w} = 26.000 g/mol; Verteilungsbreite 2,6; Tₘ = 132°C).

### Beispiel 14 Polymerisation mit Trägerkatalysator E

In einem 2l Rührautoklaven werden unter Stickstoffgegenstrom 0,76 ml einer 1,011 molaren Triethylaluminiumlösung (gelöst in Hexan) eingespritzt. Anschließend werden bei Raumtemperatur 0,307 g Trägerkatalysator E mit 11 getrocknetem Hexan eingespült. Der Reaktor wird danach auf die Polymerisationstemperatur von 70°C aufgeheizt. Nach Erreichen der Polymerisationstemperatur wird auf 0,4 bar evakuiert und Ethylen zudosiert. Der Gesamtdruck beträgt 5 bar und wird während der Polymerisation konstant gehalten. Die Polymerisation wird nach 2 Stunden abgebrochen, das überschüssige Ethylen geflasht.
Erhalten wurden 21 g eines kugelförmigen Polymerisats. Der mittlere Korndurchmesser d₅₀ gemäß Siebanalyse beträgt 250 µm, der Feinkornanteil (< 100 µm) beträgt 2%. (M_{w} = 104.000 g/mol; VB 2,9; Tₘ = 136°C)

### Beispiel 15 Herstellung des Trägerkatalysators F

Die Trägertrocknung erfolgte analog Beispiel 8, die nachfolgende Versuchsdurchführung analog Beispiel 1. Es wurden 5,7 g des getrockneten Trägermaterials mit 11,3 g einer 30%-igen MAO-Lösung (57,4 mmol Al) umgesetzt. Anschließend wurden 6,29 g des Reaktionsproduktes mit 5,08 mmol Bisphenol A (Al[MAO] : Bisphenol A = 8) umgesetzt. Die Herstellung des Trägerkatalysators erfolgte durch Zugabe einer Mischung aus 59 mg Ethylen-bis(indenyl)zirkoniumdichlorid und 19,28 g 10%-iger MAO-Lösung. Nach der vollständigen Trocknung erhielt man ein gelbes, feinkörniges Pulver mit einem Metallocengehalt von 0,7 Gew-%.

### Beispiel 16 Polymerisation mit Trägerkatalysator F

Die Polymerisation erfolgte analog Beispiel 3. Es wurden 3,43 g 10%-ige MAO-Lösung (Al[MAO] : Zr[MC] = 250) eingesetzt. Die Trägermenge betrug 1,50 g. Die Polymerisationsdauer betrug 2h, die Polymerisationstemperatur 70°C. Am Ende der Polymerisation wurde das überschüssige Propylen geflasht. Es wurden 350 g Polypropylen mit einem mittleren Korndurchmesser d₅₀ gemäß Siebanalyse von 500 µm und einem Feinkornanteil (< 200 µm) von 9,26 Gew-% erhalten. Die Polymerpartikel sind kugelförmig ( M_{w} = 25.000 g/mol; Verteilungsbreite 2,4 ; Tₘ = 130°C).

### Beispiel 17 Polymerisation mit Trägerkatalysator F

Die Polymerisation erfolgte analog Beispiel 2. Es wurden 1,13 g 10%-ige MAO-Lösung (Al[MAO] : Zr[MC] = 250) eingesetzt. Der Trägerkatalysator F wurde jedoch zuvor ausgesiebt. Es kam die Siebfraktion 14 - 10 µm zum Einsatz. Die Trägermenge betrug 0,494 g. Die Polymerisationsdauer betrug 2h, die Polymerisationstemperatur 70°C. Am Ende der Polymerisation wurde das überschüssige Propylen geflasht. Es wurden 138 g Polypropylen mit einem mittleren Korndurchmesser d₅₀ gemäß Siebanalyse von 710 µm und einem Feinkornanteil (< 200 µm) von 2,25 Gew-% erhalten. Die Polymerpartikel sind kugelförmig (M_{w} = 26.000 g/mol; Verteilungsbreite 2,5 ; Tₘ = 131°C).

### Beispiel 18 Herstellung des Trägerkatalysators G

Die Trägertrocknung erfolgte analog Beispiel 8, die nachfolgende Versuchsdurchführung analog Beispiel 1. Es wurden 3,32 g des getrockneten Trägermaterials mit 18,02 g einer 10%-igen MAO-Lösung (32,87 mmol Al) umgesetzt. Anschließend wurde das Reaktionsprodukt mit 1,48 mmol Bisphenol A (Al[MAO] : Bisphenol A = 22) umgesetzt. Die Herstellung des Trägerkatalysators erfolgte durch Zugabe einer Mischung aus 25 mg Ethylenbis(indenyl)zirkoniumdichlorid und 6,8 g einer 10%-igen MAO-Lösung zu 4,57 g des vernetzten Trägermaterials. Nach der vollständigen Trocknung erhielt man ein gelbes, feinkörniges Pulver mit einem Metallocengehalt von 0,5 Gew-%.

### Beispiel 19 Polymerisation mit Trägerkatalysator G

Die Polymerisation erfolgte analog Beispiel 2. Es wurden 0,46 g 30%-ige MAO-Lösung (Al[MAO] : Zr[MC] = 250) eingesetzt. Die Trägermenge betrug 0,735 g. Die Polymerisationsdauer betrug 2h, die Polymerisationstemperatur 70°C. Am Ende der Polymerisation wurde das überschüssige Propylen geflasht. Es wurden 50 g Polypropylen mit einem mittleren Korndurchmesser d₅₀ gemäß Siebanalyse von 2000 µm und einem Feinkornanteil (< 200 µm) von 4,20 Gew-% erhalten. Die Polymerpartikel sind kugelförmig ( M_{w} = 24000 g/mol; Verteilungsbreite 2,4 ; Tₘ = 133°C).

### Beispiel 20 Herstellung des Trägerkatalysators H

Als Trägermaterial wurde hydrophiles, hochdisperses SiO₂ (Aerosil 130, Fa. Degussa) verwendet. Die Primärpartikelgröße wird vom Hersteller mit 16 nm angegeben. Das Oxid wurde vor Einsatz zunächst bei 400°C über einen Zeitraum von 4 Stunden unter Stickstoffgegenstrom getrocknet. Der OH-Gehalt betrug 0,71 mmol/g SiO₂.
2,85 g trockenes Aerosil 130 wurden mit 30 ml trockenem Toluol suspendiert. Anschließend wurde die Suspension mit 3,88 g einer 10%-igen toluolischen MAO-Lösung (Fa. Witco; 7,07 mmol Al) gemischt und 45 min gerührt. Danach wurde bei mäßigem Rühren das Lösungsmittel bei Raumtemperatur im Vakuum abgezogen.
Danach erfo!gte die erneute Suspension des erhaltenen Feststoffes mit 30 ml wasserfreiem THF. Dem suspendierten Reaktionsgemisch wurde eine Lösung aus 0,636 mmol Bisphenol A und 20 ml THF innerhalb von 5 min zugegeben und weitere 30 min gerührt. Anschließend wurde das Lösungsmittel unter mäßigem Rühren innerhalb von 30 min bei 70°C im Vakuum abgezogen. Das erhaltene feinkörnige Pulver wurde nochmals mit 60 ml Toluol versetzt, 10 min gerührt, anschließend 15 min stehen gelassen und die über dem abgesetzten Feststoff erhaltene klare Lösung dekantiert. Danach wurde unter Rühren bei 100°C im Vakuum getrocknet.
Das so präparierte Trägermaterial wird erneut in Toluol suspendiert und mit einer toluolischen Mischung aus 20,25 mg Ethylenbis(indenyl)zirkoniumdichlorid (0,048 mmol) und 5,3 g (9,657 mmol Al) einer 10%-igen MAO-Lösung versetzt worden. Der aktive Zirkonocen/MAO-Komplex wurde zuvor 15 min stehen gelassen.
Nach einer erneuten Rührdauer von 30 min wurde das Toluol bei Raumtemperatur abgezogen, anschließend zweimal mit 40 ml wasserfreiem n-Pentan gewaschen und im Vakuum getrocknet. Zurück blieb ein gelber feinkörniger Feststoff mit einem Metallocengehalt von 0,6 Gew-%, der nach mehrtägigem Stehenlassen unter Inertgas seine Farbe nach orange ändert.

### Beispiel 21 Polymerisation mit Trägerkatalysator H

Ein 2 l Rührreaktor (Fa. Büchi) wird nach dem Inertisieren bei Raumtemperatur mit 0,49 g einer 30%igen MAO-Lösung (Al[MAO] : Zr[MC] = 200) und 200 g flüssigem Propylen gefüllt und die Mischung bei 350 Umdrehungen/min 5 Minuten gerührt.
0,75 g des unter Beispiel 20 hergestellten Trägerkatalysators H werden mit weiteren 300 g Propylen in den Reaktor gespült, die Rührzahl auf 700U/min erhöht, der Ansatz auf die Polymerisationstemperatur von 70°C aufgeheizt und die Temperatur während einer Zeit von zwei Stunden konstant gehalten. Die Reaktion wird durch Flashen des Propylens nach zwei Stunden beendet. Es wurden 93 g Polpropylen mit einem mittleren Korndurchmesser d₅₀ gemäß Siebanalyse von 710 µm und einem Feinkornanteil (< 200 µm) von 6,7 Gew-% erhalten. Die Polymerpartikel sind kugelförmig ( M_{w} = 23.000 g/mol; Verteilungsbreite 3,0; Tₘ = 132°C).

### Vergleichsbeispiel I Herstellung des Trägerkatalysators J

Die Trägertrocknung erfolgte analog Beispiel 8. 5,7 g des getrockneten Aluminiumoxid C wurden mit 50 ml trockenem Toluol suspendiert. Anschließend wurde die Suspension mit 10,96 g einer 30%-igen toluolischen MAO-Lösung (56,4 mmol Al) gemischt und 45 min gerührt. Danach wurde bei mäßigem Rühren das Lösungsmittel bei Raumtemperatur abgezogen. 2,8 g des erhaltenen Feststoffes ist ohne vorherige Umsetzung mit einem Vernetzungsmittel erneut in Toluol suspendiert und mit einer toluolischen Mischung aus 31 mg Ethylen-bis(indenyl)zirkoniumdichlorid und 8,5 g einer 10%-igen MAO-Lösung verrührt worden. Der aktive Zirkonocen/MAO-Komplex wurde zuvor 15 min stehen gelassen.
Nach einer Rührdauer von 30 min wurde das Toluol bei Raumtemperatur abgezogen, anschließend zweimal mit 40 ml wasserfreiem n-Pentan gewaschen und im Vakuum getrocknet. Zurück blieb ein gelber feinkörniger Feststoff mit einem Metallocengehalt von 0,9 Gew-%, der nach mehrtägigem Stehenlassen unter Inertgas seine Farbe nach orange bis rotbraun ändert.

### Vergleichsbeispiel II Polymerisation mit Trägerkatalysator J

Die Polymerisation erfolgte analog Beispiel 2. Es wurden 0,62 g 10%-ige MAO-Lösung (Al[MAO] : Zr[MC] = 250) eingesetzt. Die Trägermenge betrug 0,260 g. Die Polymerisationsdauer betrug 90 min, die Polymerisationstemperatur 50°C. Am Ende der Polymerisation wurde das überschüssige Propylen geflasht. Es wurden 230 g Polypropylen mit einem mittleren Korndurchmesser d₅₀ gemäß Siebanalyse von 1000 µm und einem Feinkornanteil (< 200 µm) von 4,13 Gew-% erhalten. Die Polymerpartikel sind nicht kugelförmig sondern bestehen aus unregelmäßig strukturierten verklumpten Agglomeraten (M_{w} = 35.000; Verteilungsbreite 2,5 ; Tₘ = 133°C).

### Vergleichsbeispiel III Polymerisation mit Trägerkatalysator J

Die Versuchsdurchführung erfolgte analog Beispiel 2. Es wurden anstelle von MAO 0,41 ml einer 1,011 molare Triethylaluminium-Lösung (Lösungsmittel Hexan; Al[TEAL] : Zr[MC] = 100) eingesetzt. Die Trägermenge betrug 0,251 g. Die Polymerisationsdauer betrug 60 min, die Polymerisationstemperatur 50°C. Am Ende der Polymerisation wurde das überschüssige Propylen abgeflasht. Es wurden 360 g Polypropylen mit einem mittleren Korndurchmesser d₅₀ gemäß Siebanalyse von 1000 µm, mit einem Feinkornanteil (< 200 µm) von 2,53 Gew-% erhalten. Die Polymerpartikel sind nicht kugelförmig sondern bestehen aus unregelmäßig strukturierten verklumpten Agglomeraten ( M_{w} = 37.000 g/mol; Verteilungbreite 2,4 ; Tₘ = 133°C).

### Beispiel A1)

### Synthese von vernetzten Trägern mit unterschiedlichem MAO-Anteil und Vernetzungsgrad sowie deren Charakterisierung

5,08g eines bei 400°C/4h getrockneten Aluminiumoxid C (0,99mmol OH/gAl₂O₃) wurden mit 110ml Toluol suspendiert. Anschließend wurden, im molaren Verhältnis Al(MAO) : OH (Al₂O₃) = 10, 10,36g (50,26mmol Al) einer 30%igen toluolischen Methylaluminoxanlösung zugesetzt und 30min bei Raumtemperatur gerührt. Danach wurde das Lösungsmittel im Vakuum abgezogen. Das hergestellte Pulver ist mit 90ml THF erneut suspendiert worden. Danach wurde eine Lösung aus 1,48g Bisphenol A in 10ml THF der Suspension zugesetzt (molares Verhältnis Al(MAO) : Bisphenol A = 7,8) und weitere 30min gerührt. Bei 50°C unter Vakuum erfolgte die Entfernung des Lösungsmittels. Der erhaltene feinkörnige Feststoff wurde erneut in 55ml Toluol aufgenommen, 5min gerührt, anschließend wurde die überstehende klare Lösung dekantiert (Al-Bestimmung der Waschlösung ergab einen Wert < 0,03 Mol-%; bezogen auf Mole Al des eingesetzten MAO). Der Rückstand wurde im Vakuum bei 100°C getrocknet und nochmals bei Raumtemperatur mit n-Pentan gewaschen und im Vakuum getrocknet. Der erhaltene, frei fließende Feststoff wurde eingehend charakterisiert.
Toluolextrahierbarer MAO-Anteil (nach 3h):
- - bei Raumtemperatur: 0,03 Mol-% (bez. auf Mole Al des eingesetzten MAO)
- - bei 70°C: 0,07 Mol-%
- Korngröße:: 3-5 µm
- BET-Oberfäche:: 160 m²/g

### Beispiele A2 bis A10

Die Beispiele A2 bis A10 wurden nach der gleichen Synthesevorschrift wie Al hergestellt, jedoch wurden unterschiedliche molare MAO- und Bisphenol A-Verhältnisse eingestellt. Die Syntheseparameter und die Charakterisierungsergebnisse sind Tabelle 1 zu entnehmen.

### Vergleichsbeispiel B1)

### Synthese von unvernetzten Trägern mit unterschiedlichem MAO-Anteil sowie deren Charakterisierung

5,42g eines bei 400°C/4h getrockneten Aluminiumoxid C (0,99mmol OH/gAl₂O₃) wurden mit 100ml Toluol suspendiert. Anschließend wurden, im molaren Verhältnis Al(MAO) : OH (Al₂O₃) = 10, 11,06g (53,66mmol Al) einer 30%igen toluolischen Methylaluminoxanlösung zugesetzt und 30min bei Raumtemperatur gerührt. Danach wurde das Lösungsmittel im Vakuum abgezogen. Auf einen Vernetzungsschritt wurde verzichtet. Der erhaltene feinkörnige Feststoff wurde nochmals in 60ml n-Pentan aufgenommen, 5min gewaschen und im Vakuum getrocknet. Der erhaltene, frei fließende Feststoff wurde eingehend charakterisiert.
Toluolextrahierbarer MAO-Anteil (nach 3h):
- - bei Raumtemperatur: 42 Mol-%
- - bei 70°C: 45 Mol-%
- Korngröße:: 0,5-0,8 µm
- BET-Oberfäche:: 114 m²/g

### Vergleichsbeispiele B2 bis B4)

Die Beispiele B2 bis B4 wurden nach der Synthesevorschrift B1) hergestellt, jedoch wurde der Anteil an MAO auf dem Trägeroxid verändert, auf eine Vernetzung mit Bisphenol A wurde analog Beispiel B1 verzichtet. Die Syntheseparameter und die Charakterisierungsergebnisse sind Tabelle 1 zu entnehmen.

**Tabelle 1:**

| **Tabelle 1: Ergebnisse der Trägercharakterisierung** | | | | |
|---|---|---|---|---|
| | Syntheseparameter | | Extraktion | |
| Versuchsbeispiel | Al(MAO): OH(Al2O3) [mol/mol] | Vernetzung Al(MAO) : Bisphenol [mol/mol] | MAO-lösl. Anteil*[Mol-%] | |
| | | | Raumtemp. | 70°C |
| A1 | 10 | 7,8 | 0,03 | 0,07 |
| A2 | 1,6 | 7,8 | 0,03 | 0,04 |
| A3 | 5 | 7,8 | 0,02 | 0,05 |
| A4 | 10 | 12 | - | 0,06 |
| A5 | 10 | 22 | - | 0,08 |
| A6 | 20 | 7,8 | 0,04 | 0,05 |
| A7 | 20 | 12 | - | 0,06 |
| A8 | 20 | 22 | - | 0,15 |
| A9 | 20 | 25 | - | 1 |
| A10 | 20 | 30 | - | 1,4 |

| Vergleichsbeispiel | | | | |
|---|---|---|---|---|
| B1 | 10 | unvernetzt | 42 | 45 |
| B2 | 1,6 | unvernetzt | 1,1 | 1,5 |
| B3 | 5 | unvernetzt | - | 39 |
| B4 | 20 | unvernetzt | - | 60 |

| | | | | |
|---|---|---|---|---|
| *bezogen auf eingesetzte Mole Al (MAO) | | | | |

## Patentansprüche

1. Verfahren zur Herstellung eines Katalysatorträgers, dadurch gekennzeichnet, daß man
a) ein hydrophiles, makroporöses, disperses Aluminiumoxid, Siliziumoxid, Titanoxid oder Zirkoniumoxid oder deren Mischungen bzw. Mischoxide bei 110 bis 800°C trocknet.
b) mit einem Aluminoxan und anschließend
c) mit mehrfunktionellen organischen Vernetzungsmitteln umsetzt.

2. Verfahren gemäß Anspruch 1, dadurch gekennzeichnet, daß in Stufe c) bifunktionelle Vernetzungsmittel eingesetzt werden.

3. Verfahren gemäß Anspruch 2, dadurch gekennzeichnet, daß in Stufe c) Diole, Diamine oder Diepoxyverbindungen oder deren Gemische eingesetzt werden.

4. Katalysatorträger, herstellbar durch
a) Trocknung eines hydrophilen, makroporösen, dispersen Aluminiumoxids, Siliziumoxids, Titanoxids oder Zirkoniumoxids oder deren Mischungen bzw. Mischoxiden bei 110 bis 800°C.
b) Umsetzung mit einem Aluminoxan und anschließend
c) mit mehrfunktionellen organischen Vernetzungsmitteln.

5. Geträgerter Metallocenkatalysator, herstellbar durch Vermischen eines Katalysatorträgers gemäß Anspruch 4 mit einem Umsetzungsprodukt aus Metallocenen und Aktivatoren.

6. Geträgerter Metallocenkatalysator gemäß Anspruch 5. dadurch gekennzeichnet, daß die Aktivatoren Aluminoxane sind.

7. Verfahren zur Herstellung eines geträgerten Metallocenkatalysators, dadurch gekennzeichnet, daß man einen Katalysatorträger gemäß Anspruch 4 mit einem Umsetzungsprodukt aus Metallocenen und Aktivatoren in Kontakt bringt.

8. Verfahren zur Herstellung von Polyolefinen durch Polymerisation oder Copolymerisation von Olefinen, dadurch gekennzeichnet, daß als Polymerisationskatalysator ein geträgerter Metallocenkatalysator gemäß Anspruch 5 oder 6 eingesetzt wird.

9. Verfahren zur Herstellung von Polyolefinen gemäß Anspruch 8, dadurch gekennzeichnet, daß bei der Polymerisation zusätzlich Aluminiumalkyle eingesetzt werden.

10. Verwendung von geträgerten Metallocenkatalysatoren gemäß Anspruch 5 oder 6 bei der Polymerisation oder Copolymerisation von Olefinen zur Herstellung von Polyolefinen.

## Claims

1. Process for preparing a catalyst support, characterized in that
a) a hydrophilic, macroporous, finely divided aluminium oxide, silicon oxide, titanium oxide or zirconium oxide or a mixture or mixed oxide thereof is dried at from 110 to 800°C,
b) is reacted with an aluminoxane and subsequently
c) is reacted with polyfunctional organic crosslinkers.

2. Process according to Claim 1, characterized in that bifunctional crosslinkers are used in step c).

3. Process according to Claim 2, characterized in that diols, diamines or diepoxide compounds or mixtures thereof are used in step c).

4. Catalyst support which can be prepared by
a) drying a hydrophilic, macroporous, finely divided aluminium oxide, silicon oxide, titanium oxide or zirconium oxide or a mixture or mixed oxide thereof at from 110 to 800°C,
b) reacting it with an aluminoxane and subsequently
c) with polyfunctional organic crosslinkers.

5. Supported metallocene catalyst which can be prepared by mixing a catalyst support according to Claim 4 with a reaction product of metallocenes and activators.

6. Supported metallocene catalyst according to Claim 5, characterized in that the activators are aluminoxanes.

7. Process for preparing a supported metallocene catalyst, characterized in that a catalyst support according to Claim 4 is brought in to contact with a reaction product of metallocenes and activators.

8. Process for preparing polyolefins by polymerization or copolymerization of olefins, characterized in that a supported metallocene catalyst according to Claim 5 or 6 is used as polymerization catalyst.

9. Process for preparing polyolefins according to Claim 8, characterized in that aluminium alkyls are additionally used in the polymerization.

10. Use of supported metallocene cataysts according to Claim 5 or 6 in the polymerization or copolymerization of olefins to prepare polyolefins.

## Revendications

1. Procédé de préparation d'un support de catalyseur, caractérisé en ce que
a) on sèche un oxyde d'aluminium, un oxyde de silicium, un oxyde de titane ou un oxyde de zirconium, hydrophile, macroporeux et dispersé, ou des mélanges de ceux-ci ou des oxydes mixtes, à une température de 110 à 800°C,
b) on le fait réagir avec un aluminoxane et ensuite
c) on le fait réagir avec des agents de réticulation organiques polyfonctionnels.

2. Procédé selon la revendication 1, caractérisé en ce qu'on utilise des agents de réticulation bifonctionnels dans l'étape c).

3. Procédé selon la revendication 2, caractérisé en ce qu'on utilise des diols, des diamines ou des composés diépoxy ou des mélanges de ceux-ci dans l'étape c).

4. Support de catalyseur qu'on peut préparer par
a) séchage d'un oxyde d'aluminium, d'un oxyde de silicium, d'un oxyde de titane ou d'un oxyde de zirconium, hydrophile, macroporeux et dispersé, ou de mélanges de ceux-ci ou d'oxydes mixtes, à une température de 110 à 800°C,
b) réaction avec un aluminoxane et ensuite
c) réaction avec des agents de réticulation organiques polyfonctionnels.

5. Catalyseur supporté à base de métallocène qu'on peut préparer en mélangeant un support de catalyseur selon la revendication 4 avec un produit de réaction de métallocènes et d'activateurs.

6. Catalyseur supporté à base de métallocène selon la revendication 5, caractérisé en ce que les activateurs sont des aluminoxanes.

7. Procédé de préparation d'un catalyseur supporté à base de métallocène, caractérisé en ce qu'on amène un support de catalyseur selon la revendication 4 au contact d'un produit de réaction de métallocènes et d'activateurs.

8. Procédé de préparation de polyoléfines par polymérisation ou par copolymérisation d'oléfines, caractérisé en ce qu'on utilise un catalyseur supporté à base de métallocène selon la revendication 5 ou 6 comme catalyseur de polymérisation.

9. Procédé de préparation de polyoléfines selon la revendication 8, caractérisé en ce qu'on utilise, en outre, des composés alkyl-aluminium pour la polymérisation.

10. Utilisation de catalyseurs supportés à base de métallocène selon la revendication 5 ou 6 pour la polymérisation ou la copolymérisation d'oléfines pour la préparation de polyoléfines.
